# EUROPEAN PATENT APPLICATION

(11) **EP 4 692 019 A1**
(43) Date of publication of application: **11.02.2026**
(21) Application number: 23727917.9
(22) Date of filing: 03.04.2023
(51) Int. Cl.: C04B 14/06, C08K 3/30, C08K 3/36, C08K 5/14, C08K 5/5415

(54) **POLYMER COMPOSITE, USE OF THE COMPOSITE IN THE PRODUCTION OF BEAMS, PRE-MOLDED PARTS AND INTERLOCKING FLOORS, AND PRODUCTION PROCESS**

(71) Applicant: Sileto Global Holding S.à r.l., 2453 Luxembourg (LU)
(72) Inventor: ESPERANDIO DE OLIVEIRA, Geiza, 21931-310 Rio de Janeiro - RJ (BR)
(74) Representative: Calysta NV
(86) International application number: PCT/BR2023/050110
(87) International publication number: WO 2024/207083

(57) **Abstract**

The present invention refers to a polymer matrix composite which comprises as components sand, organic or inorganic load, polyester resin, organic peroxide initiator, phase-matching additives or flexibilizing additives of the polymer structure.

Further, the present invention refers to a process of preparing said composite in addition to the use of said composite for preparing artifacts of the construction industry, including beams, columns, pre-molded roof tiles, sleepers, crosses, purlins, pre-molded gutters, interlocking floors, pre-molded construction panels, posts, polls, artificial stone for countertops and floors, flooring plates used in bridges, pre-cast slabs, cladding panels and / or latticework.

This composite presents multifold advantages when compared to the materials used today in the preparation of artifacts, as it comprises an optimized composition combining ideal physical-chemical properties to perform the functions for which it is intended.

## Description

### FIELD OF THE INVENTION

. The present invention refers to a polymer composite and use thereof in the production of beams, pre-molded parts and interlocking floors having high resistance to compression and to bending.

. Additionally, the present invention also refers to the production process of the polymer composite and of the beams, pre-molded parts and interlocking floors.

. The area of application of the present invention pertains to the field of the construction industry, more specifically, to applications designed for large structures that sustain major loads and apply pre-molded parts like beams, as well as paving areas that require high resistance for traffic and storage of heavy loads, like containers in ports, airports and industrial sites.

### BACKGROUND OF THE INVENTION

. Multifold types of beams, pre-molded parts and interlocking floors are known today, the following being particularly prominent: rectangular interlocking floor, sixteen-sided, racket, podotactil directional, warning, hollow and others.

. The beams, pre-molded parts and interlocking floor can be used in road works, sidewalks, pavements, squares, cyclepaths, communal areas in clubs, parking lots, outside areas of shopping malls, industrial floors, airport patios, container terminal patios, among other places.

. Current estimates put the global production of concrete at about 10 km³ per year, and this number continues to increase due to the massive development of urban infrastructure throughout the world. Therefore, new materials arise to counterbalance the exploitation of natural resources in construction and to minimize impact on the environment. This is the case of interlocking blocks being produced with new materials, in addition to concrete, for the same functionality.

. The beams, pre-molded parts and interlocking floor are themselves ecological, have greater durability in relation to other types and have majordrainage capacity, low and easy maintenance and lower cost. In the interlocking system, the parts fit together like a jigsaw puzzle, enabling personalization and fast change of parts, drainage and return of water to the soil owing to its fissures and material saving.

. The construction industry is one of the activities that causes most impact on the environment, since it consumes many natural resources. Forty to 75% of natural resources are used in this sector, which generates a considerable amount of residues. In Brazil alone, about 25% of the residues from industry are generated by the construction industry. Additionally, there is also the impact of the cement industry which, despite the cement manufacture procedure not producing solid residues directly, since the ash originating from the burning of fuels in the rotary oven are normally incorporated into the clinker itself, there is a high emission of gaseous pollutants and particulate material. Accordingly, the main impacts are caused by the emission of polluting gases originating from this burning. One example is the high emission of carbon dioxide (CO₂), one of the main gases that cause the greenhouse effect. Cement plants are accountable for about 5% of the global emission of carbon dioxide (CO₂), from an anthropic source, released annually into the atmosphere. This is equivalent to about 2.8 billion tons of CO₂ released annually into the atmosphere. In the production of one ton of clinker, it is estimated that one ton of CO₂ is produced, significantly contributing to increase the greenhouse effect. In the cement manufacturing process, sulfur oxide may also be released, along with nitrogen oxide, carbon monoxide and lead compounds, all of which are pollutants. Additionally, cement plants are one of the largest anthropogenic sources of mercury (Hg) emission, being accountable for about 1.71 tons of mercury launched into the atmosphere per year, without treatment or control.

. Concrete polymer, wherein the binder is a polymer resin, has become a good option for the construction industry in applications requiring high mechanical performance, durability and fast curing, important properties for materials that aim at building sustainability.

. The beams, pre-molded parts and conventional interlocking floors are made from raw materials extracted from nature - river sand, rock sand, rock powder, additives, pigments, gravel and cement having high resistance and instant curing. The materials used in the production of the interlocking floors or, as they are also known blocks or just plain interlocks, must satisfy the parameters of Brazilian standards ABNT NBR 9781: 2013 Concrete parts for paving - Specifications and Assay Methods and ABNT NBR 15953: 2011 Pavement Interlocked with concrete parts_Execution.

. As an alternative to this conventional block, there are recycled interlocking blocks, which are made from Construction Residues (RCC) and Demolition Residues (RCD).

. Additionally, as can be noted in the state of the art, various researchers having been working on developing alternative floors.

. Document EP2758353A1 protects a mixture for obtaining polymer- concrete, this mixture being comprised of a part in its volume of a filler or load and the other part a resin mixture, which may be a resin plus a hardener and an accelerator. Among the examples of resin claimed is the use of polyester or acrylic resin. However, it does not envisage the use of DCPD (dicyclopentadiene) and nor the use of chemical additives to improve the mechanical properties.

. Document US9,885,157 describes a method for installing paving tiles on a concrete base, without occurring the future break of said tiles with the vehicle traffic. As such, it makes use of a mixture (a bonder) to fix said tiles on the concrete. Polymer latex, cement, sand and hydrating agents can be used in this mixture. This composition will make a permanent union between the tiles and the cement base.

. Portland cement is the worldwide accepted name for the material usually known in the construction industry as cement. The Portland cement is a fine powder with agglomerating, binding or bonding properties, which hardens under the action of water. Once hardened, even if submitted to the action of water, Portland cement no longer decomposes.

. Portland cement was created by an English constructor, Joseph Aspdin, which patented it in 1824. At this time, it was commonplace in England to build with stone from Portland, located on an island in the south of the country. Since the result of Aspdin's invention was similar in color and in hardness to this Portland rock, he registered this name on his patent. This is why the cement is called Portland cement.

. Most types of Portland cement on the market today serve for general use. Some of them, however, have certain characteristics and properties that make them more suited for specific uses, enabling concrete or mortar with desirable resistance and durability to be obtained.

. Portland cement is comprised of clinker and additions. Clinker has limestone and clay as raw materials. First, the limestone rock is crushed, then ground and, afterwards, mixed, in suitable proportions, with ground clay. This mixture undergoes processing and ultimately generates a powder.

. The additions are other raw materials which, mixed to the clinker in the grinding phase, enable the manufacture of the various types of Portland cement, available on the market today. These other raw materials are plaster, blast furnace slag, pozzolanic materials and carbon materials.

. The clinker is the principal component and is present in all types of Portland cement. The additions may vary from one type of cement to another and it is mainly them that define the different types of cement.

. The pre-molded beams are frequently used in the construction of bridges and viaducts, buildings, commercial warehouses and others, with the aim of reducing the time and work costs by means of a rationalized constructive process. The prestress of the parts makes it possible to satisfy various projects by the characteristic of overcoming spans of varied sizes. Another advantage is the reduction in the consumption of concrete and steel due to the use of more resistant materials.

. The beams are made without segments (called staves) or whole, according to the execution of the work. Generally, the first option is recommended for bridges and projects with large spans. In contrast, the whole parts are used in spans of up to 40 meters. The project should follow the slab-beam-pillar order with a view to transferring the vertical stress. In a rectangular shape, the beams can be manufactured in varied section and size, commensurate with the particular aspects of the construction. All these pre-molded parts have a metal frame inside, often being prestressed.

. Beams and pillars made of reinforced concrete guarantee many advantages to a construction, since the concrete beams that tie the vertical pillars, and most importantly the beams are robust. The concrete beams are frequently used in the slab-beam-pillar systems to transfer the vertical stress received from the slab to the pillar, or to transmit a concentrated load, if serving as support to a pillar. The concrete beams transfer the weight of the slabs and of the other elements to the columns. The use of concrete beams enables the use of shapes with the most varied designs in the work, with this it is perfectly possible to have a well-planned work, erected with pillars, concrete beams and slabs.

. In light of the scenario of the state of the art and seeking alternatives for new materials applied in the production of beams, pre-molded parts and high resistance interlocking floors, which could be compared to the traditional Portland cement, with or without metal frame, the researchers of the present invention developed a polymer composite that can be used in the production of beams, pre-molded parts without use of a metal frame and high resistance interlocking floors for use in heavy traffic paving, and the polymer composite comprises as materials sand, inorganic or organic load, at least one dicyclopentadiene (DCPD)-based polyester resin, combined or not with virgin terephthalic (PET) or neopentylglycol (NPG) resin and at least one phase-matching additive or flexibilizer, enabling the obtainment of beams and pre-molded parts with mechanical properties achieved without the use of internal frame in the artifacts and interlocking floors with mechanical properties of high resistance floors (heavy traffic) using light traffic floor dimensions.

. Therefore, the state of the art does not contain a solution equivalent to the one presented herein in the present invention that combines technical differences, economic advantages, security and reliability.

### SUMMARY OF THE INVENTION

. The present invention refers to a polymer composite, composed of sand, organic or inorganic load, sand, inorganic or organic load, polyester resin, organic peroxide initiator and additive or flexibilizer agents of the polymer structure.

. The present invention also refers to the use of the polymer composite in the production of beams, pre-molded parts and interlocking floor of high resistance and with equal or improved mechanical properties, such as resistance to axial compression, 4-point bending resistance, resistance to water absorption and to wear by abrasion, when compared to the same artifacts produced from Portland cement under the same conditions and in the same sizes.

. The present invention also refers to the method of producing the polymer composite and the beams, pre-molded parts and interlocking floors.

. Lastly, the present invention provides for the obtainment of beams and pre-molded parts without the use of an internal frame, which present mechanical properties equal or superior to those obtained for these pre-molded artifacts made of reinforced concrete from traditional Portland cement. Additionally, in the case of interlocking floors, it is possible to achieve values of high resistance floors, that is, floors applied to heavy traffic zones or storage of heavy loads, such as containers, using floors with light traffic floor dimensions.

### DETAILED DESCRIPTION OF THE INVENTION

. The present invention refers to a polymer composite made of sand, organic or inorganic load, sand, inorganic or organic load, polyester resin, organic peroxide initiator and additive or flexibilizer agents of the polymer structure.

. The present invention also refers to the use of polymer composite in the production of beams, pre-molded parts and interlocking floor of high resistance that can be used in the construction industry.

. More specifically, the present invention refers to beams, pre-molded parts and interlocking floors for use in the construction industry, which present mechanical properties, such as resistance to axial compression, 4-point bending resistance, resistance to water absorption and to wear by abrasion, equal or improved when compared to the same artifacts produced under the same conditions and in the same sizes made from Portland cement.

. The present invention also refers to the method of producing the polymer composite and beams, pre-molded parts and interlocking floors.

. Another aspect of the present invention refers to obtaining beams and pre-molded parts, without the use of internal frame, which present mechanical properties equal or superior to those obtained for these pre-molded artifacts made of reinforced concrete from traditional Portland cement.

. The present invention also refers to obtaining highly resistant interlocking floors, that is, floors that can be applied to heavy traffic zones or storage of heavy loads, such as containers, using floors with light traffic floor dimensions.

. Lastly, the present invention refers to products defined as beams, pre-molded parts and interlocking floors, obtained with composite, for application in the construction industry.

. According to the present invention, the composite material used for obtaining the beams, pre-molded parts and interlocking floors comprises: (a) sand; (b) at least one inorganic or organic load or mixture thereof; (c) at least one polyester resin; (c) at least organic peroxide initiator and (d) at least one additive.

. In a first aspect, sand is understood to be any type of sand known in the state of the art, including sand defined as construction sand, washed sand (also known as natural sand), mine sand and quarry sand. Washed sand can be defined as fine, medium and coarse.

. According to the present invention, organic load is understood to be all residues that can be used to give a specific property or make the product less expensive, such as, for example, but not limited to, fly ash, sugar cane bagasse or eucalyptus root and other vegetable or mineral residue.

. According to the present invention, inorganic load is understood to be all residues that can be used to make a specific property or make the product less expensive, such as, for example, but not limited to, silica, alumina, limestone, smelting sand, talcum, gravel dust, plaster, lime, dolomite, bentonite, barite, attapulgite, saprolite, vermiculite, porous magnetite, calcium carbonate, magnesium carbonate, mica, graphite, gypsum and gilsonite and others.

. Polyester resins are synthetic resins formed by the reaction of dibasic organic acids and polyhydric alcohols, and according to the present invention are selected from the group comprising: unsaturated ortho-phthalic, isophthalic and/or terephthalic polyester resin, PET monomers, associated to each other or with other components such as dicyclopentadiene (DCPD) or neopentylglycol (NPG), preferably being dicyclopentadiene (DCPD), PET monomers, neopentylglycol (NPG) or combination thereof.

. The organic peroxide initiator is defined among the group selected from benzoyl peroxide, methylethylketone peroxide, tert-butyl peroxide, tert-butyl benzoate peroxide, di tert-butyl dicumyl peroxide, preferably being defined as methylethylketone peroxide, being medium reactive, desensitized with dimethylphthalate.

. Lastly, the additive is defined as a phase-matching agent or also called coupling agents, or softening agent. The phase-matching agent is selected from the group comprising: vinyltrimethoxysilane, methacryltrimethoxysilane, methacryloxypropyltrimethoxysilane, vinyltrietoxysilane, calcium diacrylate, zinc diacrylate and combination thereof; and the softening agent is selected from butylacrylate, butylmethylacrylate, methylmethacrylate, triethylene glycolmethacrylate, ethylhexylmethacrylate, acrylic acid, methacrylic acid and combinations thereof.

. As mentioned, the main objective of the present invention is a polymer composite useful in obtaining products applied to the construction industry, which are defined as beams, pre-molded parts and interlocking floors.

. A second objective of the present invention is the obtainment of products applied to the construction industry, which are defined as beams, pre-molded parts and interlocking floors using the polymer composite in the production thereof.

. The beams and pre-molded parts are prepared without the use of internal frame and present mechanical properties equal or superior to those obtained for these pre-molded artifacts made of reinforced concrete of traditional Portland cement. The interlocking floors achieve values of mechanical properties, of resistance to water absorption and to wear by abrasion of high resistance floors, that is, floors applied to heavy traffic zones or to storage of heavy loads, such as containers, using light traffic floor dimensions.

. According to the present invention the composite material, used in the production of beams, pre-molded parts and interlocking floors, is composed of sand, organic or inorganic load, polyester resin, organic peroxide indicator and an additive defined as phase-matching agent or softening agent.

. The sand used in the production of the composite presents a composition predominantly of particles of silica, but may contain other minerals such as: feldspar, mica, zircon, magnetite, ilmenite, monazite and cassiterite. Commercial sand typically presents moisture. With regards to granule size, in one preparation of the preferred composite material, an average sand granule size (0.2mm to 0.6mm), previously washed, is applied for removing most of the organic impurities, and dry, so as to present moisture under 1% in mass.

. The sand used is in the ratio of 30% to 97%, in mass, based on the total mass of the composition of the composite. Preferably the ratio is 47% to 94%, in mass, based on the total mass of the composition of the composite and more preferably from 55% to 85%, in mass, based on the total mass of the composition of the composite.

. The composite material, used in producing the artifacts of the present invention, including beams, pre-molded parts and interlocking floors, further comprises the use of at least one organic or inorganic load, which acts as filler load of the potential empty spaces generated between the grains of sand.

. The organic loads are selected from the group comprising: fly ash, sugar cane bagasse, eucalyptus root or other vegetable or mineral residue and the inorganic loads selected from the group comprising: silica, alumina, limestone, smelting sand, gravel dust, plaster, lime, dolomite, bentonite, barite, attapulgite, saprolite, vermiculite, porous magnetite, calcium carbonate, magnesium carbonate, mica, graphite, gypsum, gilsonite or mixture thereof.

. The fly ash, which is comprised of material solidified from the suspension of exhaust gases in burners, which is collected by electrostatic precipitators or extracted by mechanical filtration. Due to the solidification in suspension under gas flow, the particles obtained are, preferably, spherical, and oftentimes hollow or with major porosity, presenting sizes between 0.5µm and 100µm.

. Due to the type of mineral impurities present in the charcoal, the ash is chiefly formed from silicon dioxide (SiO₂), aluminum oxide (Al₂O₃) and iron oxide (Fe₂O₃). The ash has pozzolanic activity, which means it may react, at normal temperature and in the presence of water with calcium hydroxide and with alkalis forming calcium silicate hydrates, which are compounds capable of holding Portland cement, that is, these compounds formed maintain the cohesion between the particulate aggregates and the cementitious matrix.

. In the floors of the present invention, pozzolanic activity is not relevant, since the matrix is not comprised of Portland cement, but rather of polymer resin, whose curing reactions are cross-linking reactions of the polymer chains, not involving the formation of calcium silicate hydrate.

. Gypsum, also called plaster stone, is composed of calcium sulfate dihydrate, that is, is a calcium mineral whose chemical composition corresponds to the formula Ca(SO₄). 2H₂O. Generally, the color of this mineral ranges from white to translucent, having a micaceous, flakey appearance, pearly sheen, an unctuous (or fibrous) feel, in addition to a low hardness of the order of 2.0. It is the most abundant sulfate on the earth's crust, occurring in evaporites or in the form of interstratified layers of shale, limestone and clay, and can also be found in meteorites. Through calcination, gypsum loses its crystallization water, and can then be transformed into plaster when it maintains crystallized water (CaSO₄.1/2H₂O), or calcium sulfate (anhydrite) when it totally loses the crystallized water (CaSO₄).

. The primary application of gypsum is in the manufacture of cement, but is also used in the manufacture of sulfuric acid, chalk, glass, nail polish, plaster and in the production of beer. Additionally, plaster or calcium sulfate is used also as material for casting molds; dehydrator; binder and soil corrective (provider of calcium and sulfur), besides having application in metallurgy (in the formation of slag).

. The loads are present in the ratio of 4% to 38%, in mass, based on the total mass of the composition of the composite, preferably from 6% to 30%, in mass, based on the total mass of the composition of the composite and more preferably from 7% to 25%, in mass, based on the total mass of the composition of the composite.

. More specifically, the composite of the present invention comprises ash, gypsum or plaster in an amount which may range from 4% to 38%, in mass, based on the total mass of the composition of the composite, preferably from 6% to 30%, in mass based on the total mass of the composition of the composite and even more preferably from 7% to 25%, in mass, based on the total mass of the composition of the composite.

. The polyester resin present in the composite of the present invention is selected from the group comprising: unsaturated ortho-phthalic, isophthalic and/or terephthalic polyester resins, polyethylene terephthalate (PET) associated to each other or with other components like dicyclopentadiene (DCPD) or neopentylglycol.

. The resins are present in the ratio of 4% to 44%, in mass, based on the total mass of the composition of the composite, preferably from 6% to 38%, in mass, based on the total mass of the composition of the composite and more preferably from 8 to 32%, in mass, based on the total mass of the composition of the composite.

. The resins which are mostly applied, are mainly the unsaturated polyester resins, also being used in paints and adhesives. In the artifacts of the present invention, including beams, pre-molded parts and interlocking floors, DCPD is used in an amount which may range from 4% to 44%, in mass, preferably from 6% to 38%, in mass and even more preferably from 8 to 32%, in mass, based on the total mass of the composition of the composite material.

. Polyethylene terephthalate (PET), also used, is a thermoset polymer which was developed in 1941. This polymer is formed by the reaction between the terephthalic acid and the ethylene glycol. The main use of this polymer is in the form of fibers for weaving and in beverage packaging. Therefore, this polyester has a functional ester group in its main chain, presenting thermoset properties, that is, it has the capacity to be reprocessed in countless cycles.

. The industrial production of polyethylene terephthalate (PET) occurs in two steps: pre-polymerization followed by polycondensation. In the pre-polymerization there is the generation of the bi terephthalate oligomer (2-hydroxyethylene) (BHET), which can be obtained by two different chemical routes. In the second stage, polycondensation, occurs the reaction for obtaining the PET. The first chemical route for obtaining BHET comes about by direct esterification between the terephthalic acid and the ethylene glycol. This route is characterized as heterogeneous and autocatalytic, that is, there is no need to use catalysts. The reaction temperature in this route is in the range of 240-260°C. In the second chemical route for obtaining BHET, terephthalic acid is substituted for dimethylene terephthalate ester, with the use of catalysts in a temperature range of 170-210°C. During the polycondensation reactions, the water and methanol are eliminated as subproducts. In the floors of the present invention, PET resin is used to prepare the composite material in the form of PET monomers, preferably virgin, with the function of cross-linking the polymer matrix to provide mechanical resistance to the floor obtained.

. Few references are found in the state of the art on the use of PET as load in concrete for producing artifacts. Some reports refer to the use of shredded bottles and filaments in this application. In such cases, both the filaments and the particle obtained from the shredded bottle has the function of load and do not work as matrix in the final material, as applied in the case of the object of the present invention. Additionally, the PET used both in the form of filaments, and in the particles from the shredded bottles are thermoset versions of this polymer, that is, they are sensitive to temperature variation, which could result in warping and deformations if they were used to obtain artifacts (beams, pre-molded parts and interlocking floors) object of the present invention. In contrast, PET resin, used in the composite of the present invention, is a thermoset resin that undergoes cross-linking during polymerization, which guarantees that the end artifact will not be subject to deformation or warping with temperature variation, maintaining the format of the end artifact for long periods. It is, therefore, an entirely novel and inventive use of PET in composite materials for obtaining artifacts of the present invention and/or for multifold purposes.

. The composite of the present invention, used in the production of artifacts, including beams, pre-molded parts and interlocking floors, comprises PET monomers in an amount which may range from 4% to 44%, in mass, preferably from 6% to 38%, in mass and even more preferably from 8 to 32%, in mass, based on the total mass of the composition of the composite material.

. Neopentylglycol (NPG) is applied in the synthesis of polyesters, paints, lubricants and plasticizers. In the case of polyesters, the NPG increases the stability of the polymer to heat, to light and to the presence of water. NPG is also used in the production of esters applied to synthetic lubricants, due to its lesser tendency to sustain hydrolysis or oxidation, when compared to natural esters.

. NPG is obtained industrially though the aldol reaction of formaldehyde and isobutyraldehyde that results in the intermediary hydroxypivaldehyde, which may be converted into NPG in the presence of excess formaldehyde or else by the hydrogenation of palladium-catalyzed carbon. Among its many applications, NPG can be used as a protector group for ketones, for example, in the synthesis of gestodene, or in esters of organoboronic acid of NPG for applications in Suzuki reaction, which are cross-coupling reactions, broadly used in obtaining polyolefins, polystyrenes and biphenyl all substituted. In the composite of the present invention the NPG is used associated with cross-linked polyester resins, such that the end composite material has high thermal and dimensional stability.

. The composite of the present invention, used in obtaining beams, pre-molded parts and interlocking floors, comprises resins polyesters containing NPG in an amount which may range from 4% to 44%, in mass, preferably from 6% to 38%, in mass and even more preferably from 8 to 32%, in mass, based on the total mass of the composition of the composite material.

. The peroxide initiator used in the composition of the composite is selected from the group comprising: benzoyl peroxide, methylethylketone peroxide, tert-butyl peroxide, tert-butyl benzoate peroxide, di tert-butyl dicumyl peroxide, and preferably the methylethyl ketone peroxide is medium reactive, desensitized with dimethylphthalate and at the ratio of 0.05% to 6.0%, in mass, based on the total mass of the composite, preferably being used between 0.075% and 1.5% in mass, based on the total mass of the composition of the composite and more preferably between 0.10% and 0.85% in mass of the compound composite.

. Methylethylketone (MEKP) is an organic peroxide, with explosive potential similar to butanone peroxide. The MEKP is an oily, colorless liquid, since the butanone peroxide is a white powder in the STP. The MEKP is a little less sensitive to shocks and temperature, being more stable for storage. Depending on the reaction conditions, various adducts, or direct addition products, different to methylethylketone and hydrogen peroxide can be obtained. The first adduct reported was a cyclic dimer, C₈H₁₆O₄, in 1906. Subsequent studies showed that a linear dimer is the adduct most frequently obtained in the mixture of products, this generally being the form available commercially. Diluted solutions of 30-40% of MEKP are applied in industry and by users in general, such as artisans, like a catalyst to initiate the cross-linking of unsaturated polyester resins. For this application, MEKP is dissolved in dimethylphthalate, cyclohexane peroxide or diallylphthalate to reduce sensitivity to shock. Benzoyl peroxide can be used for the same purpose. MEKP is a serious skin irritant and may cause progressive corrosive damage or blindness.

. The composite of the present invention, used in obtaining beams, pre-molded parts and interlocking floors, also comprises methylethylketone peroxide desensitized with dimethylphthalate in an amount which may range from 0.05% to 6.0%, in mass, preferably from 0.075% to 1.50%, in mass and even more preferably from 0.10% to 0.85%, in mass, based on the total mass of the composition of the composite.

. Lastly, the composite of the present invention also comprises an additive defined as phase-matching agent or softening agent, which are selected from the group comprising: vinyltrimethoxysilane, methacryltrimethoxysilane, methacryloxypropyltrimethoxysilane, vinyltrietoxysilane, calcium diacrylate, zinc diacrylate, butylacrylate, butylmethylacrylate, methylmethacrylate, triethylene glycolmethacrylate, ethylhexylmethacrylate, acrylic acid, methacrylic acid or combinations thereof and, are present in the ratios of 0.01 to 1.1% in mass of the composite, and the additive can be partially or totally substituted by a softening agent of the polymer structure.

. The vinyltrimethoxysilane is a vinyl functional silane with a reactive methoxy group. Its main application is as cross-linking and grafting agent for manufacturing cables and tubes of high density polyethylene. However, the vinyltrimethoxysilane can be grafted in various polymers, such as various polyethylenes and polyesters. The presence of the methoxy group makes the vinyltrimethoxysilane a water-eliminating agent in applications of coatings and adhesives. The vinyltrimethoxysilane can also be used with amino silanes in the synthesis of polyethers. Moreover, the vinyltrietoxysilane also is a vinyl functional silane, but the reactive group has two carbons, ethoxy group. It has also been used as a coupling agent in polyolefins, chiefly for the case of polypropylene composite containing glass fibers.

. The composite of the present invention contains vinyltrimethoxysilane or vinyltrietoxysilane in an amount which may range from 0.01% to 1.1%, based on the total mass of the composition of the composite.

. According to the present invention the composite material, object of the present invention and used in the production of the beams, pre-molded parts and interlocking floors, is composed of:
(a) sand;
(b) at least one organic or inorganic load;
(c) at least one polyester resin;
(d) at least one organic peroxide initiator; and
(e) at least one additive.

. More specifically, the composite material, object of the present invention and used in the production of the beams, pre-molded parts and interlocking floors, is composed of:
(a) sand;
(b) at least one organic load selected from the group comprising: fly ash, sugar cane bagasse, eucalyptus root or other vegetable or mineral residue or an inorganic load selected from the group comprising: silica, alumina, limestone, smelting sand, gravel dust, plaster, lime, dolomite, bentonite, barite, attapulgite, saprolite, vermiculite, porous magnetite, calcium carbonate, magnesium carbonate, mica, graphite, gypsum, gilsonite or mixture thereof;
(c) at least one polyester resin selected from the group comprising: unsaturated ortho-phthalic, isophthalic and/or terephthalic polyester resin associated to each other or with other components such as dicyclopentadiene (DCPD) or neopentylglycol;
(d) at least one organic peroxide initiator selected from the group comprising: benzoyl peroxide, methylethylketone peroxide, tert-butyl peroxide, tert-butyl benzoate peroxide, di tert-butyl peroxide, dicumyl peroxide, preferably being the methylethylketone peroxide, being medium reactive, desensitized with dimethylphthalate; and
(e) at least additive defined as phase-matching agent or softening agent, which are selected from the group comprising: vinyltrimethoxysilane, methacryltrimethoxysilane, methacryloxypropyltrimethoxysilane, vinyltrietoxysilane, calcium diacrylate, zinc diacrylate, butylacrylate, butylmethylacrylate, methylmethacrylate, triethylene glycol methacrylate, ethylhexylmethacrylate, acrylic acid, methacrylic acid or combinations thereof.

. Additionally, the composite, object of the present invention, is useful in obtaining the beams, pre-molded parts and interlocking floors, and may also contain: a reaction accelerator system; ground rubber, glass or metal fibers, metal or polymer structures and finishings.

. The reaction accelerator system is defined from the group selected by: cobalt naphthenate, cobalt octoate, dimethylaniline (DMA), or mixture thereof. [0079]. The accelerator system is mixed to the resin in an amount which may range from 0.05% to 8.0%, in mass, based on the total mass of the composite. The ratio of 0.1 to 3.5% is preferably used, and more preferably the ratio of 0.1 to 3.5% of cobalt naphthenate or cobalt octoate, by itself or jointly with 0.002% to 0.150% of dimethylaniline (DMA) in mass, based on the total mass of the composite.

. Ground rubber originates from tires and may be present in an amount from 0% to 45%, in mass, based on the total mass of the composite. The ratio of 0% to 20% of ground rubber in mass is preferably used, based on the total mass of the composite.

. The glass or metal fibers may be: short and distributed uniformly in the matrix; or long and aligned in a single direction. The quantity of fibers may range from 0% to 8%, in mass, based on the total mass of the composite, preferably being in the ratio of 0% to 3.0% of glass or metal fibers in mass, based on the total mass of the composite.

. Metal or polymer structures are wires or mesh, and can be present in an amount which may range from 0% to 30%, in mass, based on the total mass of the composite. The ratio of 0% to 20% in mass is preferable, based on the total mass of the composite;

. The finishings are dyeing, polishing among others related to the esthetic interest or the need for signaling, depending on the site of installation of the products beams, pre-molded parts and interlocking floors obtained, previously defined as beams, pre-molded parts and interlocking floors, for a determined application.

. The composite material described in the present invention is capable of totally or partially substituting the traditional Portland concrete used in the construction industry, including the production of beams, pre-molded parts and interlocking floors.

. The composite material presents countless technical and economic advantages when compared to the state of the art.

. Among the advantages, researchers highlight the enormous potential for use in a large gamut of applications, such as, example, for producing panels, posts, crosses, polls etc., due to their high mechanical resistance, excellent dielectric properties and chemical resistance to corrosion, low porosity and water absorption and, in addition to a low weight.

. Another advantage is related to the fact that the artifacts produced with the composite of the present invention do not suffer from fungus attacks with consequent proliferation of insects as occur with the products obtained with Portland cement. This is because the main fungus that attack Portland cement feed off the calcium and phosphate released as the concrete gets older, which are not present in the composite material of the present invention. Therefore, the composite of the present invention besides being capable of maintaining the aesthetic characteristics of the artifacts produced with the Portland cement, is capable of preserving the health of people present in the environments where these artifacts are installed.

. The low deterioration of the products (beams, pre-molded parts and interlocking floors) over time when compared with the products made of traditional Portland cement, since the composite of the present invention is resistant to rot, insect attack and solar radiation and, a potential water absorption does not produce loss of hardness or other mechanical property, as this absorption is due to potential porosity of the material, having no chemical reaction with water. Besides presenting impermeability and electrical insulation when compared to reinforced concrete and not presenting toxic components, after curing.

. The products (beams, pre-molded parts and interlocking floors) obtained with the composite of the present invention do not require a metal frame, as in the case of reinforced concrete, in their structure, and consequently, do not present structural corrosion problems and the products obtained are parts with a high degree of homogeneity, making the product highly reliable.

. Lastly, the composite reduces environmental risks, because when making preferred use of ash as the load, it uses a waste of steel, thermoelectric, agrarian, sugar and ethanol industries or of any industrial process that burns biomass in boilers, reducing the residues and, the non-use of water in the manufacture thereof, avoids the need to dispose of liquid effluents.

. The composite material is prepared comprising the steps of:
(i) Drying the sand until it reaches a moisture of under or equal to 1%;
(ii) Weighing of all the components;
(iii) Obtaining the dry mixture composed of sand and load and homogenization of the components for about 20 minutes;
(iv) Obtaining the liquid mixture composed of additive agent and resin and in sequence adding the peroxide initiator into the liquid mixture and mixing until homogeneity is obtained.
(vi) Inserting the liquid mixture into the mechanical mixer since it contains the mixture of the dry aggregates and ready mixture for about 1 to 2 minutes or until a homogeneous appearance is obtained.
(v) Obtaining the composite material for use in the production of beams, pre-molded parts and interlocking floors.

. According to the present invention, the composite material comprises: (a) 70 to 85% of sand; (b) 8 to 20% of resin; (c) 6 to 25% of load; (d) 0.1 to 0.85% of peroxide initiator; and (e) 0.01 to 0.85 of additive agent.

. More specifically the composite material, object of the present invention comprises: (a) 70 to 85% of sand; (b) 8 to 20% of resin; (c) 6 to 15% of ash, gypsum or plaster; (d) 0.1 to 0.6% of peroxide initiator; (e) 0.1% to 0.85% of additive agent; and (f) 4 to 8% of powder of marble. The pre-accelerated resin may contain a reaction promoter, preferably being 1% of cobalt naphthenate;

. The beams, pre-molded parts and interlocking floors developed were prepared comprising the following steps:
(i) Producing the composite material comprised of the steps: (a) Drying the sand until it reaches a moisture of under or equal to 1%; (b) Weighing of all the components; (c) Obtaining the dry mixture; (d) Obtaining the liquid mixture, (e) Inserting the liquid mixture into the mechanical mixer since it contains the mixture of the dry aggregates and ready mixture for about 1 to 2 minutes or until a homogeneous appearance is obtained (described above).
(ii) Molding the beams, pre-molded parts or floors in the molds with previously established formats and prepared by applying a layer of release agent,
(iii) Pressing of the order of 20 tons of pressure for the large parts, such as beams and pre-molded parts and at least 4 tons of pressure for the smaller parts such as the interlocking floors.
(iv) Pre-curing in a hothouse at atmospheric pressure at a temperature of approximately 60°C for a period of 120 minutes;
(v) Curing process for a minimum period of 7 days at pressure and at ambient temperature at a temperature of approximately 25°C.

. The molding of the products occurs for 12 minutes with pressure 4t for small parts (interlocking floors) and 20t for large parts (beams and pre-molded parts). The specification of the aggregates must not exceed 1% in moisture; the specific mass of the sand should be 2.65 g/cm³; the specific mass of the fly ash should be 2.16 g/cm³; the specific mass of the gypsum should be 2.32 g/cm³; and the specific mass of the plaster may vary from 1.80 to 2.60 g/cm³.

. Estimated elementary chemical composition and Morphology.

. To define the morphology and the estimated elementary chemical composition of the product of the preferred embodiment described previously, assays were carried out on a scanning electron microscope (SEM) of the model Inspect S50 FEI with EDS. The sample of the preferred embodiment used received a gold coating of approximately 10 to 20 nm in thickness. The analyses were conducted with secondary electron beam to analyze the morphology and X-rays emitted for estimated analysis of the elementary chemical composition by the EDS.

. The micrographs show a material with low porosity, with the aggregated phases uniformly distributed and excellent adhesion of the aggregates to the polymer matrix. A different condition to that seen in traditional Portland concrete, which presents many internal phases, generated during the curing reactions thereof and the inclusion of aggregates therein, in its preparation process. During the preparation process of the traditional Portland concrete, a high porosity is generated, open and closed, due to the release of gases during curing. The result of the EDS analysis revealed that this preferred embodiment has an elementary chemical composition of 45.36% carbon atoms, 25.73% of oxygen atoms, 21.79% of silicon atoms, 5.35% of aluminum atoms and 1.77% of potassium atoms.

### . Thermal property of the composite

. To define the thermal properties, the composite, obtained by the use of dicyclopentadiene (DCPD) resin, was tested for its thermal properties with a view to determining both its thermal stability and its degradation profile. A sample of the present invention was analyzed by employing the techniques of differential scanning calorimetry (DSC) and thermogravimetric analysis (TGA), performed at the certified laboratory of the Center for Characterization and Materials Development (CCDM / DEMA /UFSCar).

. The differential scanning calorimetry (DSC) technique determines the difference in the energy supplied to a substance (sample) and a reference material (standard), depending on the temperature, both being simultaneously subject to a controlled program of temperature variation. Considering that the transitions of phases of the materials occur under heat flow, with the release (in the case of exothermic events) or with the absorption (in the case of endothermic events) thereof, phenomena such as: solidification, fusion, vitreous transition, oxidation and curing can be monitored. The DSC curves of a same preferred embodiment were acquired in an item of equipment carrying the Netzsch mark, model DSC 214 Polyma, under nitrogen gas flow of 50mL/min, using a sealed aluminum pan, following the heating / cooling program now described: (a) Heating the temperature from 23°C to 300°C at a rate of 20°C/min; (b) Isotherm at the temperature of 300°C for 5 minutes; (c) Cooling from the temperature of 300°C to the temperature of 23°C at a rate of 20°C/min; (c) Isotherm at the temperature of 23°C for 5 minutes; and (d) Heating the temperature from 23°C to the temperature 300°C at a rate of 20°C/min.

. The analysis results from the sample of the preferred embodiment, obtained by using dicyclopentadiene (DCPD) resin, of the present invention show that after 14 days of curing, there is slight residual curing in two endothermic events of 10 and 20J/g at the temperatures of 114°C and 230°C, respectively, and the curing of the material can be considered practically finalized in this period. In the concrete of conventional Portland cement, there is a more intense curing process in the first 7 days, and the curing process can be considered practically concluded after 28 days. However, the curing of the concrete of conventional Portland cement may take up to 2 years to be completely finalized, depending on the application.

. Thermogravimetric analysis is an analytical technique that monitors the variation in mass of the sample as a function of the variation in temperature. The thermogravimetric analysis of the same preferred embodiment was conducted in a thermogravimetric analyzer of the TA Instruments brand, model TA Q500, using a heating rate of 20°C/min, alumina pan, with a temperature ranging from 30 to 850°C. In the first stage of the analysis, a temperature ranging from 30°C to 550°C was employed, inert nitrogen gas atmosphere at a flow of 50mL/min. In the second stage of the analysis, with a temperature range of 550°C to 850°C, oxidative atmosphere of oxygen gas was used with a flow of 50 mL/min.

. The results of the thermogravimetric analysis of the preferred embodiment employing dicyclopentadiene (DCPD) resin, showed that up to 230°C there was a slight elimination of residual monomers and water, originating from the residual curing of the material, of the order of 0.79% m/m. From 230°C up to 550°C, a loss of mass of 8.11% m/m was recorded, corresponding to the degraded organic matter, originating from the polymer chains of lesser molar mass. At 850°C, a mass 90.44% m/m of residual ash was obtained. The present result shows that the material originating from a preferred embodiment using DCPD resin presents major thermal stability.

### . Flammability Test

. Considering also the characterization of the thermal properties and of susceptibility to fire of the material of the present invention, a flammability test was carried out on the same preferred embodiment. The flammability test was performed by the certified laboratory of the CCDM, according to the standard IEC 60695-11-20:2015 Fire Hazard Testing Part 11-20: Test Flames. The results demonstrated that the material produced by a preferred embodiment with DCPD resin is flame resistant, and it is not possible to see a visible flame on the face opposite the body of evidence and nor occurring formation of a greater hole than 3mm on the specimen after cooling.

### . Mechanical Properties

. Determining the mechanical properties of resistance to axial compression and resistance to traction by diametral compression was carried out in the certified laboratory of Falcão Bauer (Technology Center for Quality Control) following the Technical Standards ABNT NBR 7680-1/2015 (ASTM C39) and ABNT NBR 7222:2011 (ASTM C496 / C496M), respectively, in specimens obtained according to the present invention containing a dicyclopentadiene (DCPD) resin. Resistance to given axial compression determined was (70.5 ± 0.2) MPa and resistance to traction by diametral compression was (6.1 ± 0.1) MPa. A typical embodiment of Portland cement presents values of resistance to axial compression ranging between 10 and 45 MPa and resistance to traction by diametral compression ranging between 2 and 7 MPa, depending on the characteristic or the water / cement ratio used. Accordingly, the embodiment of the present invention, using DCPD resin, is more resistant to axial compression than a typical embodiment of Portland cement. This same preferred embodiment further presents resistance to traction by diametral compression equivalent to that achieved by a typical embodiment of Portland cement.

. The load testing of the beams in two preferred embodiments, both with dicyclopentadiene resin, was conducted by a major constructor at its Large Structures Laboratory, according to the Standard ABNT NBR 9607:2019 (similar to ACI-318:2002) on beams of 50cm x 30cm x 2.87m. A total load of 21.5 tons was loaded on the beams of the two preferred embodiments, the arrow being formed by the load on the beams measured. No arrow was determined, that is, the deformation sustained by both beams subject to a load of 21.5 tons was equal to 0mm.

. Determining the abrasion resistance property was carried out by way of wear by abrasion assay at the certified laboratory of Falcão Bauer (Technology Center for Quality Control), following the Standards ABNT NBR 9781-1/2013 (ASTM C936 / C936M 20), in samples of interlocking floors of the same preferred embodiment with a dicyclopentadiene (DCPD) resin. The value of abrasion by wear obtained for the material of the present invention was 19.5mm, which according to the standard ABNT NBR 9781 (ASTM C936 / C936M 20) classifies the interlocking floor of this material as highly resistant to wear, as the value is less than 20.0mm of wear by abrasion.

. Considering that sleepers are in practice inverted bi-supported beams, some evaluations made for these applications may be relevant in the present invention. Among the main evaluations that should be considered are the positive and negative momentums, the resistance to recurrent loading on the support and the overload on the support of the track for a preferred embodiment with dicyclopentadiene (DCPD) resin.

. Evaluating the positive and negative momemntums, on the supports and on the center, for a preferred embodiment employing a dicyclopentadiene resin, was carried out according to the standards ABNT NBR 11709:2015 and AREMA:2019, at the Certified laboratory of LAEDE (Laboratory of Acoustics and Dynamic and Static Tests), employing loads of 108.93 kN in the negative momentum on the supports, 143.21 kN in the positive momentum on the supports, 39.66 kN in the negative momentum on the center and 27.76kN in the positive momentum on the center. No damage, crack or fissure was noted on any point of the tested sleeper, which behaves like an inverted bi-supported beam.

. Evaluating the recurrent loading on the support, which can also be called fatigue assay, was carried out in accordance with the standard ABNT NBR 11709:2015 and the standard AREMA:2019, at the Certified laboratory of LAEDE (Laboratory of Acoustics and Dynamic and Static Tests), employing loads ranging from 14.32 kN to 157.53kN, which corresponds to a variation of 10 to 110% of the load of the positive moment on the supports. Additionally, a frequency of 7Hz was used in a total of 3 million load and unload cycles. No damage, crack or fissure was noted on any point of the sleeper, produced from a preferred embodiment using the dicyclopentadiene (DCPD) resin of the present invention.

. The sleeper's capacity to sustain an overload was evaluated by applying a force of 250.62 kN on the support thereof at a rate of 50 kN/min. This overload was applied for a period of 5 minutes, and then unloaded at the same rate, in accordance with the standards NBR 11709:2015 and AREMA:2019, at the Certified laboratory of LAEDE (Laboratory of Acoustics and Dynamic and Static Tests). No damage, crack or fissure was noted on any point of the sleeper, produced with the same preferred embodiment employing dicyclopentadiene (DCPD) resin. Soon afterwards, the sleeper support was once again loaded using the same rate up to breaking point, which reached a load of 318.30 kN.

. The moduli of elasticity (MOE) and rupture (MOR) the same preferred embodiment employing dicyclopentadiene (DCPD) resin, were tested according to the standards NBR 11709:2015 and AREMA:2019, at the Certified laboratory of LAEDE (Laboratory of Acoustics and Dynamic and Static Tests), at a displacement rate of 127mm/min. In applying a load of 30.8 kN, there was not sufficient bending to perform the measurement of the arrow at the center of the sleeper due to its high rigidity and, with based on this result it is estimated that the MOE is superior to 15 GPa. The modulus of rupture (MOR), determined for the sleeper tested produced with a preferred embodiment was 21.59 MPa. The value recommended by AREMA:2019 is greater than 17.2 MPa. The modulus of elasticity (MOE) was also tested by the standard ABNT NBR 8522:2017 (ASTM C469) being determined at 15.7GPa.

. Another preferred embodiment, using PET monomer resin, was evaluated relative to its mechanical properties of resistance to axial compression and resistance to wear by abrasion. Additionally, its water absorption capacity was also evaluated. All the assays were carried out at the certified laboratory of Falcão Bauer (Technology Center for Quality Control) following the Standards ABNT NBR 9781-1/2013 (ASTM C936 / C936M - 20). The results obtained showed a resistance to axial compression of (64.9 ± 8.2) MPa, a resistance to wear by abrasion of 20.5 mm and a water absorption capacity of (5.4 ± 0.3)%.

. Having described an example of a preferred embodiment of the present invention, it should be understood that the scope of the present invention encompasses other possible variations of the inventive concept described, being limited solely by the content of the accompanying claims, potential equivalents being included therein.

### . Example 1: Production process of the composite material.

. To prepare the composite material, firstly the sand is dried until it reaches a moisture of under or equal to 1%.

. Next, the components are weighed in the defined proportions, one example of preferred embodiment being composed of 81% of sand; 8.35% of load, preferably gypsum, 9.65% of resin, preferably from DCPC; 0.38% of initiator, preferably MEKP and 0.62% of vinyltrimethoxysilane additive.

. After weighing, the dry compounds sand and load are mixed in a conventional mixer (industrial mixer or cement-mixer) or even manual mixture if the amount of composite to be produced is small, for approximately 20 minutes, in pressure and ambient temperature conditions, until complete homogenization.

. The next stage is the formation of the organic liquid mixture (called Syrup), which consists of adding the additive (phase-matching agent or softening agent, which are selected from the group comprising: vinyltrimethoxysilane, methacryltrimethoxysilane, methacryloxypropyltrimethoxysilane, vinyltrietoxysilane, calcium diacrylate, zinc diacrylate, butylacrylate, butylmethylacrylate, methylmethacrylate, triethylene glycolmethacrylate, ethylhexylmethacrylate, acrylic acid, methacrylic acid or combinations thereof) ortophthalic, isophthalic and or terephthalic unsaturated polyester associated to each other or with other components such as dicyclopentadiene (DCPD) or and mixing for about 20 seconds to guarantee the homogeneity of the liquid phase. In sequence, the initiator is added to the methylethylketone peroxide, being medium reactive, desensitized with dimethylphthalate at liquid mixture and homogenized for about 20 seconds. [00123]. Lastly, the dry mixture is added to a mixer, to which the liquid mixture is added and immediately mixed for 1 to 2 minutes until a homogeneous appearance is obtained.

### . Example 2: Production process of the beams, parts and pre-molded and interlocking floor

. The composite material obtained according to the example 1 is used for molding the beams, pre-molded parts or floors in the molds with previously established formats and prepared by applying a layer of release agent, which may be vaseline, mineral oil, paraffins of vegetable, animal or petrochemical origin, polymeric solution of linear polymers (polyethylene, polypropylene, polyalcoholvinyl, polyvinyl chloride polytetrafluorethylene), polymeric films or silicones or combinations thereof.

. In the case of the production of larger parts such as beams and pre-molded parts, pressing is used in the order of 20 tons for about 30 seconds and for the production of smaller parts such as interlocking floors, a pressing is used in the order of 4 tons for about 30 seconds. After pressing, the part is forwarded for the pre-cure in a hothouse at atmospheric pressure at the temperature of approximately 60°C for a period of 120 minutes and subsequent curing process for a minimum period of 7 days at pressure and at a temperature of 25°C.

## Claims

1. A polymer composite **characterized by** comprising:
- sand;
- at least one organic or inorganic load;
- at least one polyester resin;
- at least one organic peroxide initiator; and
- at least one additive.

2. The composite according to claim 1, **characterized by** the load being selected from the group comprising fly ash or sugar cane bagasse or eucalyptus root or other vegetable or mineral residue, silica, alumina, limestone, smelting sand, talcum, gravel dust, plaster, lime, dolomite, bentonite, barite, attapulgite, saprolite, vermiculite, porous magnetite, calcium carbonate, magnesium carbonate, mica, graphite, gypsum, gilsonite and combination thereof.

3. The composite according to claim 1, **characterized by** the polyester resin being selected from the group comprising unsaturated ortho-phthalic, isophthalic and/or terephthalic polyester resin associated to each other or with other components such as dicyclopentadiene (DCPD) or neopentylglycol (NPG), polyether ethylene phthalate monomer (PET) being thermoset resin and combination thereof.

4. The composite according to claim 1, **characterized by** the organic peroxide initiator being methyl ethyl ketone peroxide, being medium reactive, desensitized with dimethylphthalate.

5. The composite according to claim 1, **characterized by** the additive being phase-matching additives or flexibilizing additives.

6. The composite according to claim 5, **characterized by** the phase-matching additive being selected from the group comprising vinyltrimethoxysilane, methacryltrimethoxysilane, methacryloxypropyltrimethoxysilane, vinyltrietoxysilane, calcium diacrylate, zinc diacrylate and combination thereof; and the flexibilizing additive is selected from the group comprising butylacrylate, butylmethylacrylate, methylmethacrylate, triethylene glycolmethacrylate, ethylhexylmethacrylate, acrylic acid, methacrylic acid and combinations thereof.

7. The composite according to claim 3 **characterized by** the resin being dicyclopentadiene present in an amount ranging from 4% to 44%, in mass, based on the total mass of the composite.

8. The composite according to claim 3, **characterized by** the resin being PET monomer present in an amount ranging from 4% to 44%, in mass, based on the total mass of the composite.

9. The composite according to claim 3, characterized being the resin being an orthophthalic unsaturated polyester resin present in an amount ranging from 4% to 44%, in mass, based on the total mass of the composite.

10. The composite according to claim 3, **characterized by** the resin being isophthalic unsaturated polyester resin present in an amount ranging from 4% to 44%, in mass, based on the total mass of the composite.

11. The composite according to claim 3, **characterized by** the resin being terephthalic unsaturated polyester resin present in an amount ranging from 4% to 44%, in mass, based on the total mass of the composite.

12. The composite according to claim 3, **characterized by** the resin being neopentylglycol present in an amount ranging from 4% to 44%, in mass, based on the total mass of the composite.

13. The composite according to claim 1, **characterized by** the sand being preferably sand of average gain size and is present in the ratio of 30% to 97% in mass, based on the total mass of the composite.

14. The composite according to any one of claims 1 or 2, **characterized by** containing at least one load in the ratio of 4% to 38%, in mass, based on the total mass of the composite.

15. The composite according to claim 1, **characterized by** comprising a reaction accelerator system; ground rubber and/or glass or metal fibers.

16. The composite according to claim 15, **characterized by** the fiberglass or metal being short and distributed uniformly in the matrix or long and aligned in a single direction.

17. The composite according to claim 1, **characterized by** further comprising meshes and metal or polymer frames in layers or structures.

18. The composite according to any one of claims 1 or 13, **characterized by** the sand comprising particles of silica, and may contain other minerals such as: feldspar, mica, zircon, magnetite, ilmenite, monazite and cassiterite.

19. The composite according to claim 2, **characterized by** the ash compriseing silicon dioxide (silica), aluminum oxide (alumina) and iron oxide (hematite).

20. A process of preparing the polymer composite as defined in any one of claims 1 to 19 **characterized by** comprising the following steps:
(i) Drying the sand;
(ii) Weighing the solid materials that make up the composite;
(iii) Mixing the solid and dry materials, being sand and at least one load, for a period of 20 minutes, until thorough homogenization;
(iv) Weighing the liquid materials that make up the composite;
(v) Mixing at least one liquid additive, being a matching or flexibilizing agent, to a resin and thorough homogenization for a period of 1 to 2 minutes, to obtain the organic mixture, also called syrup;
(vi) Adding the initiator to the organic mixture or syrup and homogenization for 1 to 2 minutes;
(vii) Adding the prepared organic mixture to the mixture of dry components;
(viii) Homogenization of the mass formed, for a period of 1 to 3 minutes.

21. Use of a polymer composite as described in any one of claims 1 to 19 **characterized by** being for the production of artifacts selected among beams, columns, pre-molded roof tiles, sleepers, crosses, purlins, pre-molded gutters, interlocking floors, pre-molded construction panels, posts, polls, artificial stone for countertops and floors, flooring plates used in bridges, pre-molded slabs, cladding panels and / or latticework.

22. Use of a polymer composite prepared by the process as defined in claim 20 **characterized by** being for preparing an artifact selected from among beams, columns, pre-molded roof tiles, sleepers, crosses, purlins, pre-molded gutters, interlocking floors, pre-molded construction panels, posts, polls, artificial stone for countertops and floors, flooring plates used in bridges, pre-cast slabs, cladding panels and / or latticework.

23. The use according to claim 21 **characterized by** the artifact being a beam, pre-molded part or interlocking floor.

24. A production process of the beam, pre-molded parts and interlocking floor **characterized by** comprising the following steps:
(i) Drying the sand;
(ii) Weighing the solid materials that make up the composite;
(iii) Mixing of and dry materials, being sand and at least one load, for a period of 20 minutes, until thorough homogenization;
(iv) Weighing of the liquid materials that make up the composite;
(v) Mixing at least one liquid additive, being a matching or flexibilizing agent, to a resin and thorough homogenization for a period of 1 to 2 minutes, to obtain the organic mixture, also called syrup;
(vi) Adding the initiator to the organic mixture or syrup and homogenization for 1 to 2 minutes;
(vii) Adding the prepared organic mixture to the mixture of dry components;
(viii) Homogenization of the mass formed, for a period of 1 to 3 minutes;
(ix) Molding the beams, pre-molded parts or floors in the molds with previously established formats and prepared with application of a layer of release agent,
(x) Pressing of the order of 20 tons of pressure for the large parts, such as beams and pre-molded parts and of at least 4 tons of pressure for smaller parts such as interlocking floors.
(xi) Pre-curing in hothouse at atmospheric pressure at a temperature of approximately 60°C for a period of 120 minutes;
(xii) Curing process for a minimum period of 7 days at pressure and at ambient temperature at the temperature of approximately 25°C.
